# FASCICULE DE BREVET EUROPEEN

(11) **EP 1 293 428 B1**
(45) Date de publication et mention de la délivrance du brevet: **25.08.2004**
(21) Numéro de dépôt: 02291773.6
(22) Date de dépôt: 15.07.2002
(51) Int. Cl.: B64G 1/50

(54) **Dispositif de transfert de chaleur**
Wärmetauscher
Heat exchanger

(30) Priorité: 18.09.2001 FR 0112059
(43) Date de publication de la demande: 19.03.2003
(73) Titulaire: ALCATEL, 75008 Paris (FR)
(72) Inventeur: Cluzet, Gérard, Résidence Les Terrasses, 06210 Mandelieu (FR); Amidieu, Marcel, 06150 Cannes La Bocca (FR); Tjiptahardja, Tisna, 06150 Cannes La Bocca (FR)
(74) Mandataire: Smith, Bradford Lee

(56) Documents cités:
- EP-A- 0 822 139
- US-A- 4 832 113
- US-A- 5 036 905
- US-A- 5 743 325

## Description

La présente invention concerne un dispositif de transfert de chaleur, et notamment un dispositif de transfert de chaleur adapté à l'évacuation de la dissipation de chaleur générée par les équipements embarqués à bord d'un satellite.

Lors du fonctionnement en orbite d'un satellite, les équipements qui y sont embarqués dissipent une forte quantité de chaleur. Il est donc nécessaire de prévoir un dispositif de transfert de chaleur pour évacuer cette dernière afin d'éviter une surchauffe du satellite en transférant la chaleur depuis l'intérieur du satellite vers l'espace.

Un certain nombre de systèmes sont connus actuellement pour effectuer ce transfert de chaleur. Ces systèmes comprennent un ou plusieurs radiateurs déployables reliés au satellite et munis d'un dispositif de transfert de chaleur. Le principe de ce dispositif de transfert de chaleur est toujours fondé sur l'utilisation d'un fluide circulant entre la zone chaude, c'est-à-dire la zone où la puissance thermique est dissipée, et la zone froide, c'est-à-dire la zone où cette puissance thermique absorbée par le fluide est transférée vers le milieu extérieur. Le principe de fonctionnement de ces dispositifs repose donc sur les propriétés d'évaporation/condensation du fluide utilisé. Chacun des documents US-A-5 743 325 et EP-A-0 822 139 montre un dispositif de transfert de chaleur correspondant au prèambule de la revendication 1.

Un premier type de dispositifs connu est le caloduc. Ce système comprend un tube métallique (en aluminium par exemple) dans lequel circule un fluide caloporteur (en général l'ammoniac), et utilise les propriétés des écoulements diphasiques liquide-vapeur ainsi que les propriétés de capillarité des liquides. Ainsi, un caloduc est un système diphasique fermé dans lequel la vapeur créée au niveau de la zone chaude (dite zone d'évaporation) est aspirée vers la zone froide (où la pression est moins élevée) et s'y condense sur la paroi métallique du tube. La phase liquide du fluide utilisé glisse le long de la paroi métallique du tube en sens inverse de l'écoulement de la phase vapeur du fluide, qui reste confinée au centre du tube. Ce retour du fluide le long de la paroi est assuré par une structure capillaire (mèche ou rainures longitudinales) reliant les deux extrémités du tube et qui joue à la fois le rôle de pompe capillaire et de séparateur des deux phases liquide-vapeur.

Les dispositifs de transfert de chaleur utilisant les caloducs, quoique largement utilisés dans le domaine des satellites, posent néanmoins un certain nombre de problèmes.

En premier lieu, leurs performances en termes de capacité de transport de chaleur est limitée à quelques centaines de W.m. Ainsi, pour les satellites de télécommunications de forte puissance, ces dispositifs sont insuffisants et peu adaptés aux distances et chemins thermiques entre les sources chaude et froide.

En outre, pour les essais thermiques à effectuer au sol, il faut veiller à ce que les caloducs soient horizontaux ou avec les zones d'évaporation au-dessous des zones de condensation, sinon le liquide doit remonter par capillarité en s'opposant aux forces de gravitation.

Ainsi, on préfère utiliser des dispositifs à boucle fluide monophasique ou diphasique.

Les dispositifs à boucle fluide monophasique ont un principe de fonctionnement similaire à celui d'un chauffage central utilisant la chaleur sensible du fluide, donc avec des variations importantes de température. Le fluide caloporteur (fréons, eau, ammoniac, etc...) absorbe la puissance dissipée par les équipements, augmentant ainsi sa température, et rejette cette puissance en se refroidissant dans un ou plusieurs radiateurs.

Bien que permettant d'absorber des puissances nettement plus élevées que ce qui est possible à l'aide des caloducs, ce type de dispositifs n'est cependant toujours pas satisfaisant, notamment pour les satellites de forte puissance.

En effet, ce sont des dispositifs actifs qui requièrent un pompage mécanique à l'aide d'une pompe alimentée électriquement qui doit, de plus, assurer un débit de fluide important, compte tenu du principe de transfert utilisé. Ainsi, ils consomment trop de puissance de pompage pour un contrôle thermique efficace.

De plus, la pompe mécanique pose des problèmes de vibration, maintenance et durée de vie.

Ainsi, on préfère à l'heure actuelle utiliser des boucles fluides diphasiques à pompage capillaire utilisant, comme les caloducs, la chaleur latente de vaporisation du fluide pour absorber et rejeter la chaleur. Le fluide caloporteur change ainsi d'état lors de sa circulation dans la boucle. Il se vaporise en absorbant la chaleur dissipée par les équipements au niveau de l'évaporateur, et se condense en rejetant cette chaleur dans un ou plusieurs condenseurs situés au niveau du radiateur. Le fluide est mis en circulation par une pompe capillaire localisée au niveau de l'évaporateur. Les phases vapeur et liquide sont séparées, hormis au niveau du condenseur où elles circulent dans le même sens, contrairement au caloduc dans lequel les deux phases circulent en sens inverse dans le même tube.

En termes de capacité de transfert de chaleur, ce type de dispositifs est nettement plus efficace que les caloducs pour une structure capillaire beaucoup plus limitée (seul l'évaporateur présente cette structure de pompage).

Cependant, des problèmes subsistent pour les satellites de forte puissance tels que les satellites de télécommunications actuels.

En effet, compte tenu des puissances à dissiper au sein de ces satellites, de grandes surfaces sont nécessaires au niveau des radiateurs déployables. Ces surfaces ne peuvent plus être obtenues avec un seul panneau par radiateur, dont la surface peut difficilement dépasser quelques m² alors qu'une surface radiative globale supplémentaire pouvant aller jusqu'à 60 m² est nécessaire.

Ainsi, les radiateurs déployables doivent être constitués de plusieurs panneaux reliés mécaniquement entre eux.

Or la pression motrice disponible des boucles fluides diphasiques à pompage capillaire limite la distance de transfert de chaleur pour les puissances élevées. Ainsi, une même boucle fluide diphasique à pompage capillaire ne peut pas être utilisée d'un bout à l'autre de l'ensemble des panneaux d'un radiateur déployable de grandes dimensions.

Le but de la présente invention est donc de mettre au point un dispositif de transfert de chaleur adapté à être utilisé à bord d'un satellite de forte puissance, et notamment à être utilisé en relation avec des radiateurs déployables de ce satellite comportant plusieurs panneaux sans limitation notable de sa capacité de transfert thermique.

La présente invention propose à cet effet un dispositif de transfert de chaleur comprenant une boucle fluide à pompage capillaire, dite première boucle fluide, comportant un évaporateur situé à proximité d'une source de dissipation de chaleur d'un satellite, et un condenseur relié par des moyens de transfert thermique audit évaporateur et situé au niveau d'un panneau de radiateur déployable d'un satellite,
ledit dispositif étant **caractérisé en ce que** ledit radiateur déployable comprend au moins deux panneaux et en ce qu'il comprend en outre au moins une deuxième boucle fluide à pompage capillaire, lesdites boucles fluides étant montées en cascade les unes avec les autres de sorte que l'évaporateur de chacune des boucles fluides autre que ladite première boucle fluide est situé au niveau du panneau auquel appartient le condenseur de la boucle précédente, et le condenseur de chacune desdites boucles fluides autre que ladite première boucle fluide est situé au niveau du panneau suivant celui auquel appartient le condenseur de ladite première boucle, l'évaporateur d'une boucle étant relié au condenseur de la même boucle par des moyens de transfert thermique flexibles.

Ainsi, selon l'invention, au lieu d'utiliser une seule boucle fluide à pompage capillaire sur l'ensemble de la surface des panneaux du radiateur déployable, on utilise plusieurs boucles en cascade.

On réalise donc un système fiable, passif et modulaire pour l'évacuation de la chaleur dissipée notamment par les satellites de forte puissance. Les moyens de transfert thermique flexibles permettent le maintien plié du radiateur déployable notamment avant la phase de mise sur orbite du satellite.

Selon un mode de réalisation avantageux, le transfert de chaleur entre le condenseur d'une boucle et l'évaporateur de la boucle suivante est assuré au moyen d'au moins un caloduc. On assure ainsi un transfert efficace d'une boucle à l'autre.

En outre, l'évaporateur d'une ou de plusieurs des boucles peut être formé d'une pluralité de circuits évaporateurs élémentaires montés en parallèle ou en série les uns avec les autres.

De même, le condenseur d'une ou de plusieurs des boucles peut être formé d'une pluralité de circuits condenseurs élémentaires montés en parallèle ou en série les uns avec les autres.

D'autres caractéristiques et avantages de la présente invention apparaîtront à la lecture de la description suivante d'un mode de réalisation de l'invention, donné à titre illustratif et nullement limitatif.

Dans les figures suivantes :
- la figure 1 représente un schéma de principe d'une boucle fluide diphasique à pompage capillaire
- la figure 2 représente de manière schématique un dispositif de transfert de chaleur selon l'invention installé au niveau des panneaux d'un radiateur déployable d'un satellite
- la figure 3 représente très schématiquement un satellite muni de radiateurs déployables.

Dans toutes ces figures, les éléments communs portent les mêmes numéros de référence.

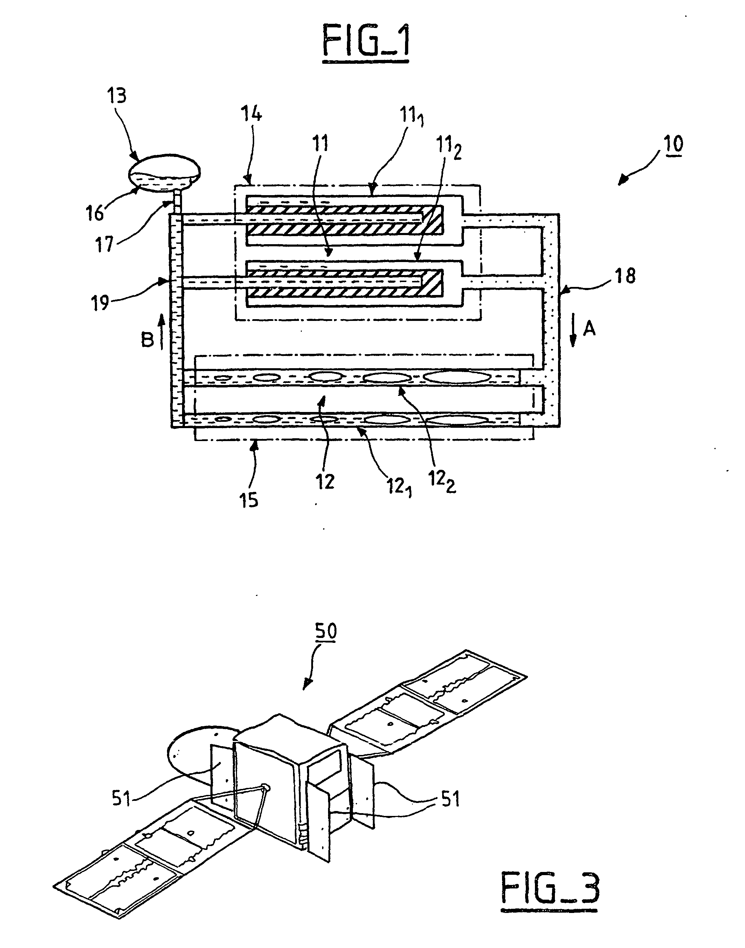

On va maintenant expliquer le principe de la boucle fluide diphasique à pompage capillaire en relation avec la figure 1.

On voit en figure 1 une boucle fluide à pompage capillaire 10 de type CPL (pour Capillary Pumped Loop en anglais) comprenant un évaporateur 11, un condenseur 12 et un réservoir pressuriseur 13. En trait mixte et de manière schématique sont représentés également la source de chaleur 14, c'est-à-dire les équipements (non représentés) dissipateurs de chaleur embarqués à bord d'un satellite, au voisinage de laquelle se trouve l'évaporateur 11, et la zone d'évacuation de la chaleur 15 située au niveau d'un panneau de radiateur déployable (non représenté) du satellite, et au voisinage de laquelle se trouve le condenseur 12.

Le réservoir 13 de fluide caloporteur 16, par exemple de l'ammoniac, alimente la boucle 10 en fluide au moyen d'une conduite 17. Le fluide 16, à l'état liquide symbolisé par des hachures sur la figure 1, pénètre dans l'évaporateur 11 où il est vaporisé. La vapeur ainsi générée (symbolisée par des points sur la figure 1) s'écoule vers le condenseur 12 par une ligne de transport 18.

La vapeur est alors condensée en liquide au sein du condenseur 12 et revient vers l'évaporateur via une ligne de transport 19.

L'évaporateur 11 a une structure interne capillaire (non représentée). Il est formé de deux tubes évaporateurs 11₁, 11₂ montés en parallèle et comportant sur leur surface interne des rainures longitudinales et circonférentielles s'étendant d'un bout à l'autre de leur longueur. Ainsi, le liquide arrivant dans l'évaporateur 11 est aspiré radialement à travers la mèche capillaire et se réchauffe en progressant vers l'extérieur de l'évaporateur, où se trouve la puissance à dissiper, avec un débit très faible. Il se vaporise alors sur la surface de l'évaporateur, où se forment des ménisques initiateurs de force capillaire. L'augmentation de pression capillaire dans la mèche est proportionnelle à la tension superficielle du fluide 16 et inversement proportionnelle au rayon équivalent des ménisques.

A sa sortie de la mèche capillaire de l'évaporateur 11, la vapeur est donc collectée dans l'enveloppe externe de l'évaporateur 11, en interface directe avec la source de chaleur 14. Du fait de la pression capillaire de pompage dans la boucle 10, cette vapeur est ensuite dirigée dans la ligne de vapeur et s'écoule jusqu'au condenseur 12, lui-même formé de deux circuits condenseurs 12₁ et 12₂ montés en parallèle.

Le réservoir pressuriseur 13 sert notamment à réguler la température de fonctionnement de la boucle 10 ainsi que de pompe d'amorçage de la boucle 10.

Les lignes de transport 18 et 19 sont de simples tubes induisant de faibles pertes de pression et sont très légères ; elles peuvent être pliées très facilement de par leur flexibilité intrinsèque. Elles sont généralement en alliage d'aluminium ou en acier et ont un diamètre intérieur compris entre 4 et 10 mm.

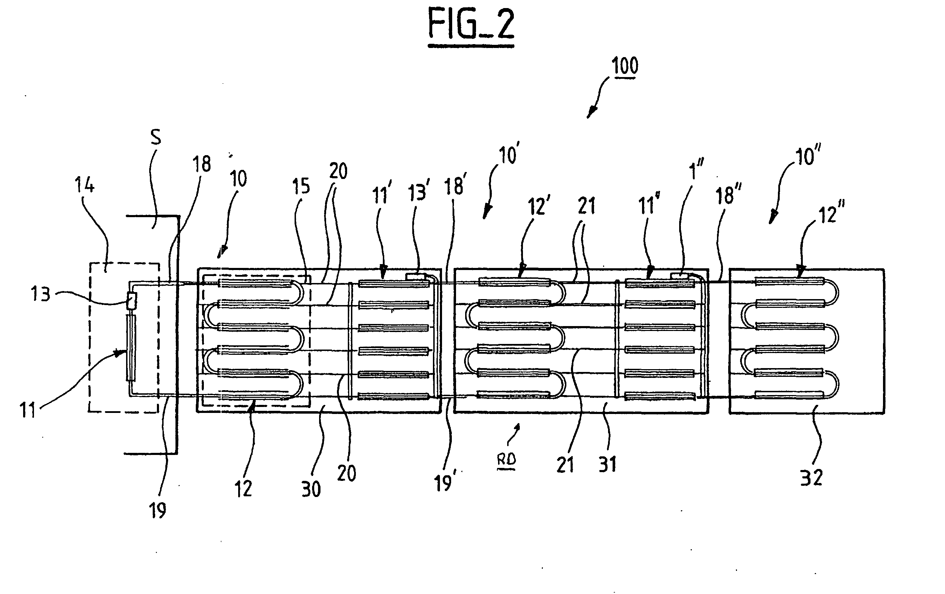

On va maintenant décrire un dispositif selon l'invention utilisant plusieurs boucles fluides diphasiques à pompage capillaire en cascade, et illustré en figure 2.

La figure 2 représente donc un dispositif 100 selon l'invention. Le dispositif 100 comprend une pluralité de boucles fluides à pompage capillaire montées en cascade ; trois d'entre elles sont illustrées sur la figure 2. On y trouve ainsi la boucle 10 de la figure 1, l'évaporateur 11 et le condenseur 12 ayant été très schématiquement représentés, ainsi que deux autres boucles 10' et 10" du même type que la boucle 10.

Les différents éléments des boucles 10' et 10" sont référencés au moyen des mêmes numéros que les éléments correspondants de la boucle 10 mais portent des «'» ou des « " » selon qu'ils appartiennent respectivement à la boucle 10' ou à la boucle 10".

Comme cela a été expliqué précédemment, l'évaporateur 11 de la boucle 10 est situé à bord du satellite S, représenté très schématiquement sur la figure 2, au niveau de la source de chaleur 14 de ce dernier, et le condenseur 12 est situé sur un panneau 30 du radiateur déployable RD du satellite S. Etant donné que l'évaporateur 11 et le condenseur 12 de la boucle 10 sont reliés entre eux au moyen de lignes de transport 18 et 19 sous forme de tubes flexibles, il n'y a pas de problème lorsque le radiateur RD est plié.

Le radiateur déployable RD comprend plusieurs panneaux, ici trois, 30, 31 et 32, reliés mécaniquement entre eux par des moyens non représentés. Ces panneaux sont initialement (avant le lancement du satellite sur son orbite) repliés les uns sur les autres. Après le lancement du satellite et sa mise en orbite, ces panneaux sont déployés de manière à constituer une grande surface d'évacuation de la chaleur, nécessaire notamment pour les satellites actuels de forte puissance.

Pour ce type de satellites, la surface nécessaire d'évacuation de la chaleur est très importante, typiquement de l'ordre de 40 m². A cet effet, le satellite dispose de quatre radiateurs déployables comprenant chacun trois panneaux de 3,3 m². Ces quatre radiateurs déployables sont disposés par exemple au niveau des coins du satellite, qui possède une forme sensiblement parallélépipédique.

Pour illustrer la position classique des radiateurs déployables dans un satellite, on a représenté schématiquement en figure 3 un satellite 50 muni de quatre radiateurs déployables 51 (trois seulement sont visibles en figure 3). Ces radiateurs déployables sont mono-panneaux pour simplifier l'illustration, mais ils peuvent être remplacés par des radiateurs multi-panneaux tel que celui illustré à la figure 2.

Selon l'invention, la boucle 10 est reliée à la boucle 10' par des moyens de transfert thermique 20 tels que des caloducs intégrés au panneau 30 ; la boucle 10' est elle-même reliée à la boucle 10" par des moyens de transfert thermique 21 tels que des caloducs intégrés au panneau 31.

Plus précisément, l'évaporateur 11' de la boucle 10' (constitué d'une pluralité de circuits évaporateurs élémentaires montés en parallèle) se trouve au niveau du panneau 30 et est relié par les caloducs 20 au condenseur 12 de la boucle 10 qui se trouve également au niveau du panneau 30.

Le condenseur 12' de la boucle 10' (constitué d'une pluralité de circuits condenseurs élémentaires montés en série) se trouve quant à lui sur le panneau 31 et est relié à l'évaporateur 11' par des lignes de transport de chaleur 18', 19' sous forme de tubes flexibles. Ces tubes flexibles permettent le rangement sans problème en position pliée du radiateur déployable RD.

De même, l'évaporateur 11" de la boucle 10" (constitué d'une pluralité de circuits évaporateurs élémentaires montés en parallèle) se trouve au niveau du panneau 31 et est relié par les caloducs 21 au condenseur 12' de la boucle 10' qui se trouve également au niveau du panneau 31.

Le condenseur 12" de la boucle 10" (constitué d'une pluralité de circuits condenseurs élémentaires montés en série) se trouve quant à lui sur le panneau 32 et est relié à l'évaporateur 11" par des lignes de transport de chaleur 18", 19" sous forme de tubes flexibles. Ces tubes flexibles permettent également le rangement sans problème en position pliée du radiateur déployable RD.

Pour évacuer une puissance thermique P0, le dispositif 100 selon l'invention fonctionne de la manière suivante.

La puissance P0 est transférée du satellite S au panneau 30 par la boucle 10. Grâce aux caloducs intégrés 20 et aux deux faces radiatives du panneau 30, ce dernier évacue dans l'espace la puissance P1 inférieure à P0.

La puissance P0-P1 est transférée du panneau 30 au panneau 31 par la boucle 10'. Grâce aux caloducs intégrés 21 et aux deux faces radiatives du panneau 30', ce dernier évacue dans l'espace la puissance P2 inférieure à P1 et à P0-P1.

La puissance P0-P1-P2 est enfin transférée du panneau 31' au panneau 32" par la boucle 10", et évacuée dans l'espace grâce aux deux face radiatives du panneau 32".

La présente invention n'est pas limitée au mode de réalisation qui vient d'être décrit.

Notamment, les boucles fluides diphasiques à pompage capillaire utilisées peuvent être du type CPL ou du type LHP (pour Loop Heat Pipe en anglais).

Le transfert de chaleur entre le condenseur d'une boucle et l'évaporateur de la boucle suivante peut être assuré par au moins un caloduc, appartenant par exemple à un réseau de caloducs, ou directement sans ce moyen.

Par ailleurs, les boucles peuvent être reliées entre elles soit par des caloducs intégrés, soit directement.

Le fluide caloporteur utilisé peut être tout type de fluide adapté autre que l'ammoniac, selon la gamme de température de fonctionnement et les performances recherchées.

En outre, chaque évaporateur peut être constitué de plusieurs circuits élémentaires évaporateurs montés en parallèle ou en série, et de même, chaque condenseur peut être constitué de plusieurs circuits élémentaires condenseurs montés en parallèle ou en série. Dans un tel cas, chaque circuit élémentaire condenseur peut être relié au circuit élémentaire évaporateur de la boucle suivante par un caloduc indépendant, comme cela est illustré schématiquement en figure 2.

Sinon, chaque boucle peut comprendre un évaporateur simple associé à un condenseur simple, plusieurs boucles de ce type pouvant être disposées en parallèle.

Enfin, on pourra remplacer tout moyen par un moyen équivalent sans sortir du cadre de l'invention.

## Revendications

1. Dispositif de transfert de chaleur (100) comprenant une boucle fluide à pompage capillaire (10), dite première boucle fluide, comportant un évaporateur (11) situé à proximité d'une source de dissipation de chaleur (14) d'un satellite (S), et un condenseur (12) relié par des moyens de transfert thermique (18, 19) audit évaporateur (11) et situé au niveau d'un panneau (30) de radiateur déployable (RD) d'un satellite (S),
ledit dispositif étant **caractérisé en ce que** ledit radiateur déployable (RD) comprend au moins deux panneaux (30, 31, 32) et **en ce qu'**il comprend en outre au moins une deuxième boucle fluide à pompage capillaire (10', 10"), lesdites boucles fluides (10, 10', 10") étant montées en cascade les unes avec les autres de sorte que l'évaporateur (11', 11") de chacune des boucles fluides (10', 10") autre que ladite première boucle fluide (10) est situé au niveau du panneau (30, 31) auquel appartient le condenseur (12, 12') de la boucle précédente (10, 10'), et le condenseur (12', 12") de chacune desdites boucles fluides (10', 10") autre que ladite première boucle fluide (10) est situé au niveau du panneau (31, 32) suivant celui auquel appartient le condenseur (12) de ladite première boucle (10), l'évaporateur (11, 11', 11") d'une boucle (10, 10', 10") étant relié au condenseur (12, 12', 12") de la même boucle (10, 10', 10") par des moyens de transfert thermique (18, 19 ; 18', 19' ; 18", 19") flexibles.

2. Dispositif selon la revendication 1 **caractérisé en ce que** le transfert de chaleur entre le condenseur (12, 12', 12") d'une boucle (10, 10', 10") et l'évaporateur (11, 11', 11") de la boucle suivante est assuré au moyen d'au moins un caloduc (20, 21).

3. Dispositif selon l'une des revendications 1 ou 2 **caractérisé en ce que** l'évaporateur d'une ou de plusieurs desdites boucles est formé d'une pluralité de circuits évaporateurs élémentaires montés en parallèle ou en série les uns avec les autres.

4. Dispositif selon l'une des revendications 1 à 3 **caractérisé en ce que** le condenseur d'une ou de plusieurs desdites boucles est formé d'une pluralité de circuits condenseurs élémentaires montés en parallèle ou en série les uns avec les autres.

## Patentansprüche

1. Wärmetauscher (100), aufweisend einen durch Kapillarkräfte gepumpten Kühlkreislauf (10), der als erster Kühlkreislauf bezeichnet wird und einen Verdampfer (11) aufweist, der in der Nähe einer Wärmeabstrahlungsquelle (14) eines Satelliten (S) angeordnet ist, und einen Kondensator (12), der durch Wärmeübertragungsvorrichtungen (18, 19) mit diesem Verdampfer (11) verbunden ist und auf einem Panel (30) eines entfaltbaren Radiators (RD) eines Satelliten (S) angeordnet ist;
wobei dieser Wärmetauscher **dadurch gekennzeichnet ist, dass** der entfaltbare Radiator (RD) mindestens zwei Panels (30, 31, 32) aufweist sowie dadurch, dass er außerdem mindestens einen zweiten durch Kapillarkräfte gepumpten Kühlkreislauf (10', 10") aufweist, wobei diese Kühlkreisläufe (10, 10', 10") in Kaskade so nacheinander angeordnet sind, dass der Verdampfer (11', 11 ") jedes Kühlkreislaufs (10', 10") außer des genannten ersten Kühlkreislaufs (10) auf dem Panel (30, 31 ) angeordnet ist, zu dem der Kondensator (12, 12') des vorhergehenden Kreislaufs (10, 10') gehört, und der Kondensator (12, 12') jedes dieser Kühlkreisläufe (10', 10") außer dem genannten ersten Kühlkreislauf (10) ist auf dem Panel (31, 32) angeordnet, welches jenem folgt, zu dem der Kondensator (12) des ersten Kreislaufs (10) gehört, wobei der Verdampfer (11, 11', 11") eines Kreislaufs (10, 10', 10") mit dem Kondensator (12, 12', 12") desselben Kreislaufs (10, 10', 10") durch flexible Wärmetauschvorrichtungen (18, 19; 18',19'; 18", 19") verbunden ist.

2. Wärmetauscher nach Anspruch 1, **dadurch gekennzeichnet, dass** die Wärmeübertragung zwischen dem Kondensator (12, 12', 12") eines Kreislaufs (10, 10', 10") und dem Verdampfer (11, 11', 11") des folgenden Kreislaufs mit Hilfe von mindestens einem Wärmerohr (20, 21) erfolgt.

3. Wärmetauscher nach einem der Ansprüche 1 oder 2, **dadurch gekennzeichnet, dass** der Verdampfer eines oder mehrerer der Kreisläufe aus einer Vielzahl von Elementarverdampferkreisen gebildet wird, die parallel zueinander oder in Reihe nacheinander angeordnet sind.

4. Wärmetauscher nach einem der Ansprüche 1 bis 3, **dadurch gekennzeichnet, dass** der Kondensator eines oder mehrerer der Kreisläufe aus einer Vielzahl von Elementarkondensatorkreisen gebildet wird, die parallel zueinander oder in Reihe nacheinander angeordnet sind.

## Claims

1. A heat transfer device (100) including a capillary-pumped first fluid loop (10) including an evaporator (11) situated on a satellite (S) in the vicinity of a source of dissipated heat (14) and a condenser (12) connected by heat transfer means (18, 19) to said evaporator (11) and situated on a deployable radiator (RD) panel (30) of a satellite (S), said device being **characterized in that** said deployable radiator (RD) comprises at least two panels (30, 31, 32), and **in that** it further comprises at least one second capillary-pumped fluid loop (10', 10"), said fluid loops (10, 10', 10") being connected in cascade with each other so that the evaporator (11', 11") of each of the fluid loops (10', 10") other than said first fluid loop (10) is on the same panel (30, 31) as the condenser (12, 12') of the preceding loop (10, 10') and the condenser (12', 12") of each of said fluid loops (10', 10") other than said first fluid loop (10) is on the panel (31, 32) next to that carrying the condenser (12) of said first loop (10), the evaporator (11, 11', 1 1 ") of one loop (10, 10', 10") being connected to the condenser (12, 12', 12") of the same loop (10, 10', 10") by flexible heat transfer means (18, 19; 18', 19'; 18", 19").

2. A device according to claim 1 **characterized in that** heat is transferred between the condenser (12, 12', 12") of one loop (10, 10', 10") and the evaporator (11, 11', 11") of the next loop by means of at least one heat pipe (20, 21).

3. A device according to either claim 1 or claim 2 **characterized in that** the evaporator of one or more of said loops takes the form of a plurality of individual evaporator circuits connected in parallel or in series with each other.

4. A device according to any of claims 1 to 3 **characterized in that** the condenser of one or more of said loops takes the form of a plurality of individual condenser circuits connected in parallel or in series with each other.
